## Europäisches Patentamt
## European Patent Office
## Office européen des brevets

(11) Veröffentlichungsnummer: **0 008 362**
**B1**

(12) **EUROPÄISCHE PATENTSCHRIFT**

(45) Veröffentlichungstag der Patentschrift:
**12.05.82**

(21) Anmeldenummer: **79102473.0**

(22) Anmeldetag: **16.07.79**

(51) Int. Cl.³: **B 29 D 7/22**

(54) **Verfahren und Vorrichtung zum kontinuierlichen Verdicken und Aufrauhen der Ränder einer Bahn aus thermoplastischem Material.**

(30) Priorität: **27.07.78 DE 2832891**

(43) Veröffentlichungstag der Anmeldung:
**05.03.80 Patentblatt 80/5**

(45) Bekanntmachung des Hinweises auf die Patenterteilung:
**12.05.82 Patentblatt 82/19**

(84) Benannte Vertragsstaaten:
**CH DE FR GB IT**

(56) Entgegenhaltungen:
**DE-A-2 154 129**
**DE-A-2 045 452**
**DE-A-2 247 442**
**DE-A1-2 344 679**
**DE-A-2 361 828**
**DE-A-2 423 208**
**DE-B-1 279 320**
**DE-B-1 729 686**
**DE-B-1 779 515**
**FR-A-1 571 647**

(73) Patentinhaber: **AGFA-GEVAERT Aktiengesellschaft, D-5090 Leverkusen 1 (DE)**

(72) Erfinder: **Pogrzeba, Gerhard, D.I., Friedensstrasse 5, D-4018 Langenfeld (DE)**
Erfinder: **Geiger, Julius, Dr., Am Buschfeld 2, D-5068 Odenthal (DE)**
Erfinder: **Neworal, Alfred, D.I., Zedernweg 2, D-5090 Leverkusen 31 (DE)**
Erfinder: **Bussmann, Heinrich, D.I., Franz-Peter-Kürten-Weg 3, D-5000 Köln 80 (DE)**
Erfinder: **Hourticolon, Roland, Ing.-grad., Karl-Huschens-Strasse 13, D-5653 Leichlingen 1 (DE)**
Erfinder: **Hannappel, Rudolf, Sonderburger Strasse 17, D-5090 Leverkusen 1 (DE)**
Erfinder: **Auweiler, Heinz, Erich-Ollenhauer-Strasse 28, D-5090 Leverkusen 1 (DE)**

BUNDESDRUCKEREI BERLIN

## Verfahren und Vorrichtung zum kontinuierlichen Verdicken und Aufrauhen der Ränder einer Bahn aus thermoplastischem Material

Die vorliegende Erfindung betrifft ein Verfahren und eine Vorrichtung zum kontinuierlichen Verdicken und Aufrauhen der Ränder einer Bahn aus thermoplastischem Material, wobei die Bahn mit ihren Rändern durch Stationen mit rotierbaren profilierten Werkzeugen und gegenüber den Werkzeugen angeordneten Sonotroden von Ultraschallköpfen geführt wird.

Beim Aufwickeln von Bahnen, die mit lichtempfindlichen Emulsionen beschichtet sind, treten infolge des Wickelzuges Druckbelichtungen auf. Außerdem besteht bei jeder gewickelten Bahn die Gefahr, daß sich beim Transport die Wickellagen axial gegeneinander verschieben (ausschießen).

Die genannten Probleme werden im allgemeinen durch Randverdickung gelöst. Hierbei wird der durch den Wickelzug hervorgerufene Druck zwischen den Wickellagen von den verdickten Bahnrändern, den Randabschnitten, aufgenommen und dadurch zum Beispiel Druckbelichtungen bei Schichten aus photographischen druckempfindlichen Emulsionen verhindert oder eine Übertragung (Abklatschen) der aufgegossenen Schichten, wie Farbschicht, Emulsionsschicht, Rückseitenschicht und des Druckbildes von bedruckten Flächen auf die andere Seite der nächsten Lage der Bahn bei der Lagerung vermieden.

Es sind viele Verfahren zur Lösung dieses Problems bekannt.

Eine Verdickung der Ränder kann z. B. dadurch erreicht werden, daß man an den Rändern der Bahn Streifen aus Papier oder Folie lose einlaufen läßt oder nach der FR-PS 1 571 647 an der Rändern kleine Wülste aufträgt und so die Ränder zur Aufnahme des Lagendruckes zwischen den Windungen veranlaßt.

Fortschrittlicher, da zusätzliches Material sparend, sind Kaltprägeverfahren zur Verformung der Bahnränder. Beim Kaltprägeverfahren wird der Bahnrand durch Eindrücken eines profilierten Prägerades gegen ein weiches Gegenrad an den punktförmigen Profilerhöhungen des Prägerades durchstoßen. Die hierbei entstehenden Aufwerfungen führen zu einer Randverdickung wie z. B. in der DE-AS 2 247 442 beschrieben. Diese Kaltpräge-, Kaltriffel- oder Kalträndelverfahren zeigen Nachteile insofern, als sich die erzielten Verformungen nach geringer Zeit unter der Druckeinwirkung im gewickelten Zustand zurückbilden, so daß schon nach dem ersten Umrollvorgang Druckbelichtungen oder Abklatscherscheinungen auftreten können, oder daß sich die Wicklungen der Bahn beim Transport verschieben (Ausschießen). Hierdurch entstehen sowohl Beschädigungen der Bahnkanten und somit eine Einreiß- oder Durchreißgefahr der Bahn in folgenden Bearbeitungsmaschinen, als auch eine Randwelligkeit oder Flügeligkeit der Bahn. Mit anderen Verfahren sind daher nur geringere Wickeldurchmesser für die Bahnen möglich. Eine nach der Kaltprägung erfolgende Wärmebehandlung der Einprägungen am Rand der Bahnen gemäß der DE-AS 2 344 679 kann das vorliegende Problem ebenfalls nicht lösen.

Eine Verbesserung bringen die Warmprägeverfahren gemäß der DE-A-2 423 208.

Bei diesem Warmpräge- oder -rändelverfahren werden ein oder mehrere beheizte Prägeränder auf die Ränder der Bahn gedrückt. Die in die Bahn eindringenden Prägespitzen verformen das Material thermoplastisch, so daß rings um die Spitzen Aufwulstungen entstehen, die zu einer Randüberhöhung führen. Auch diese thermoplastischen Verformungen bilden sich unter Druckeinwirkung zum Teil wieder zurück. Die Rückbildung steigt mit der Wickelspannung und dem Wickeldurchmesser. Damit die Prägung ihren Zweck — nämlich den Schutz vor Druckbelichtungen und das Verhindern des Ausschießens des Wickels — erfüllen kann, muß sie bis zum Fertigungsende höher als die Schichtdicke bleiben. Die dafür erforderliche hohe Temperatur und die großen Anpreßkräfte führen durch Erweichen auch der Umgebung der Prägung zu Verwerfungen des Bahnrandes (Flügeligkeit).

Die Flügeligkeit wird mit zunehmender Prägetiefe größer und führt ab einer bestimmten Stärke zu verfahrenstechnischen Schwierigkeiten, so daß die Prägetiefe begrenzt ist. Aus diesem Grund kann nur bis zu einem verhältnismäßig geringen Wickeldurchmesser gewickelt werden und ein Rationalisierungseffekt mit großen Wickeldurchmessern wird nicht erreicht.

Es ist auch bekannt, daß verformte Kunststoffe durch ihr inneres Gefüge das Bestreben haben, ihre ursprüngliche Form wieder anzunehmen, also daß sich sowohl kalt als auch warm erfolgte Prägungen im Laufe der Zeit ohne äußere Einwirkung zurückbilden.

In den Patentanmeldungen DE-A-2 045 452 und DE-A-2 154 129 werden Verfahren und Vorrichtungen beschrieben, die nicht rückbildende Zeichen, wie Nummern oder Buchstaben auf Folien mit Hilfe von Ultraschall aufbringen, wobei das Material ohne Anwendung von mechanischem Einpreßdruck, sondern durch eine Berührung und einer damit verbundenen Erhitzung des Bahnmaterials durch die Reibungsenergie des Ultraschallkopfes so erzeugt werden, daß diese Zeichen auch bei Dunkelheit lesbar sind. Um größerflächige Zeichen herstellen zu können, werden die Werkzeuge für ein Zeichen in eine Vielzahl einzelner sich von der Oberfläche des Werkzeuges erstreckender Vorsprünge aufgeteilt. Für eine Randverdickung und -aufrauhung eignen sich diese Vorrichtungen wenig, da mit diesen Vorrichtungen keine für eine Randverdickung ausreichende Verformung erreicht werden kann.

Der Erfindung liegt die Aufgabe zugrunde, ein Verfahren und eine Vorrichtung der eingangs genannten Art zu schaffen, mit denen es auf einfache Weise möglich ist, die Ränder einer thermoplastischen Bahn kontinuierlich mit formstabilen Verdickungen zu versehen, die höher als die auf die Bahn aufgebrachten Schichten sind, und eine ausreichende Rauhigkeit besitzen, um ein seitliches Ausschießen der Bahn zu vermeiden und keine Flügeligkeit der Bahnränder hervorrufen.

Diese Aufgabe wird bei einem Verfahren der einleitend genannten Ausbildung gemäß der Erfindung dadurch gelöst, daß die thermoplastischen Verdickungen und Aufrauhungen mit Ultraschallschwingungsenergie und gleichzeitigem ständig wirkendem Anpreßdruck der rotierbaren Werkzeuge gegen die Sonotroden erzeugt werden.

Bei der Verwendung von Ultraschallschwingungsenergie und Druck zum kontinuierlichen Verdicken und Aufrauhen der Ränder einer Bahn zeigt sich überraschenderweise auch bei extrem großen Überhöhungen, daß keine Flügeligkeit auftritt. Dieser Effekt ermöglicht eine wesentlich feinere Teilung des Werkzeugmusters als beim Warmprägen, was zu einem wesentlich größeren Verformungsvolumen und damit zu größerer Formstabilität führt. Außerdem besteht die Möglichkeit, durch größeres Verdicken und anschließendes Kalibrieren (Flachdrücken zwischen zwei Rollen) ein größeres Verformungsvolumen bei gleichbleibender Endüberhöhung zu erreichen, was zu einer noch größeren Formstabilität führt.

Außerdem bietet das Verdicken und Aufrauhen der Ränder einer Bahn mit Ultraschall und Druck überraschenderweise und für den Fachmann nicht vorauszusehen die Möglichkeit, in einem Arbeitsgang eine beidseitige Randverdickung auf der Ober und Unterseite der Bahn durch entsprechende Gestaltung der Werkzeuge zu erreichen, wodurch die Gefahr des Ausschießens beträchtlich vermindert wird, da sich die Verdickungen auf der Ober- und Unterseite der Bahnkanten unter Druck ineinander verhaken.

Bei einer Vorrichtung der einleitend genannten Art wird die Aufgabe dadurch gelöst, daß das Werkzeug mit einer Andruckvorrichtung versehen und so gelagert ist, daß die zwischen dem Werkzeug und der Sonotrode hindurchführbare Bahn gegen die Sonotrode ständig mit Druck anpreßbar ist

Die wesentlichen Vorteile dieser erfindungsgemäßen Vorrichtung beruhen auf der Tatsache, daß sich das rotierbare Werkzeug und die Sonotrode nicht so erwärmen, daß auf dem Bahnrand die Umgebung der Verdickungen warm werden können. Durch die konzentrierte Reibungsenergie an den Berührungsstellen Sonotrode—Bahn unter dem Gegendruck des profilierten Werkzeugrades auf der Gegenseite der Bahn werden Vertiefungen in die Bahnränder eingeschmolzen, wobei das wegschmelzende Material rund um die Vertiefungen Aufwulstungen bilden, die sich nicht mehr rückverformen. Auch tritt keine Staubbildung, wie z. B. bei Polyesterfolien, die mit Wärme geprägt und dabei angesengt werden, auf, da die Ultraschallenergie viel konzentrierter wirkt und keine wesentliche Wärmestrahlungsenergie abgibt.

Das Anpressen des Werkzeuges erfolgt mittels variabler einstellbarer Gewichte, durch Luftzylinder oder mit Federn.

In einer vorteilhaften Ausführungsform ist zum Erreichen eines beidseitigen verzugsfreien Verdickens der Bahn das rotierbare Werkzeug in Laufrichtung der Bahn auf dem Umfang mit vorstehenden Profilen und die Sonotrode mit jeweils den Profilen mittig gegenüberliegenden Nuten in Laufrichtung der Bahn versehen. Überraschenderweise entstehen so Aufwölbungen auf beiden Seiten der Materialbahnräder. Auf der Seite des rotierbaren Werkzeuges bilden sich Aufwölbungen entlang der Grate zum Werkzeug hin, während sich in den Rillen Aufwölbungen zur Sonotrode hin bilden. Diese Aufwölbungen haben die verschiedensten Formen je nach Ausbildung des Werkzeuges und der Sonotrode.

Hat das Werkzeug auf dem Umfang umlaufende Rillen und Grate, so bilden sich pro Rille zwischen den Graten parallel zum Bahnrand je zwei Aufwölbungen und auf der Gegenseite der Bahn gegenüber den Graten des Werkzeuges in den Nuten der Sonotrode je eine Aufwölbung.

Hat das rotierende Werkzeug keine umlaufenden Nuten, sondern einzelne vorstehende Kegel oder Pyramiden, so bilden sich Vertiefungen an den Spitzen und rundum eine Aufwölbung auf der Werkzeugseite sowie Kegel oder Pyramiden auf der Sonotrodenseite des Materialbahnrandes. Weitere Kombinationen sind möglich zwischen Kegeln, Pyramiden und umlaufenden Graten und Rillen.

Um keine Relativgeschwindigkeit zwischen der Bahn und dem rotierbaren Werkzeug zu erhalten, kann das Werkzeug durch ein von der Bahn mitgenommenes Reibrad angetrieben werden.

Gemäß einer besonderen Ausführungsform der Erfindung können die Verdickungen zunächst stärker als gewünscht ausgeführt werden und dann zur weiteren Erhöhung ihrer Tragkraft durch mit Druck aufliegende Walzen kalibriert, das heißt auf die gewünschte Höhe gebracht werden.

Statt der feststehenden Sonotrode kann in vorteilhafter Weise auch eine rotierende Sonotrode angeordnet sein, die auf ihren Umfang für eine einseitige Verdickung der Bahnränder glatt ist oder für eine beidseitige Verdickung der Bahnränder mit in Laufrichtung der Bahn verlaufenden Profilen versehen ist.

So sind z. B. auch quer oder schräg zur Bahnlaufrichtung verlaufende Verdickungen, etwa wie eine Verzahnung, möglich. Je nach Ausbildung des Werkzeuges und der Sonotrode sind die unterschiedlichsten Formen und Feinheiten als Prägemuster erzielbar.

In einer geeigneten Ausführungsform besteht das Profil auf dem Umfang des rotierbaren Werkzeuges aus mindestens einem umlaufenden Grat oder mindestens einer Reihe in Laufrichtung der Bahn angeordneter Kegel- oder pyramidenförmiger Erhebungen.

Ein Ausführungsbeispiel der Erfindung wird nachstehend anhand de· Zeichnungen näher erläutert. Es zeigt

Fig. 1 die Ultraschallvorrichtung in einer schematischen Darstellung,

Fig. 2 das Zusammenwirken des rotierenden Werkzeuges mit der Ultraschall-Sonotrode,

Fig. 3 Beispiele der Randverdickungen durch das rotierbare Werkzeug und die Ultraschall-Sonotrode mit

a)  gerilltem Werkzeug,
b)  mit kegeligen runden Stiften versehenem Werkzeug,
c)  mit Rechteckpyramiden versehenem Werkzeug und

Fig. 4 eine Ausführungsform der Vorrichtung mit einer rotierenden Sonotrode und einer nachgeschalteten Kalandrierstation.

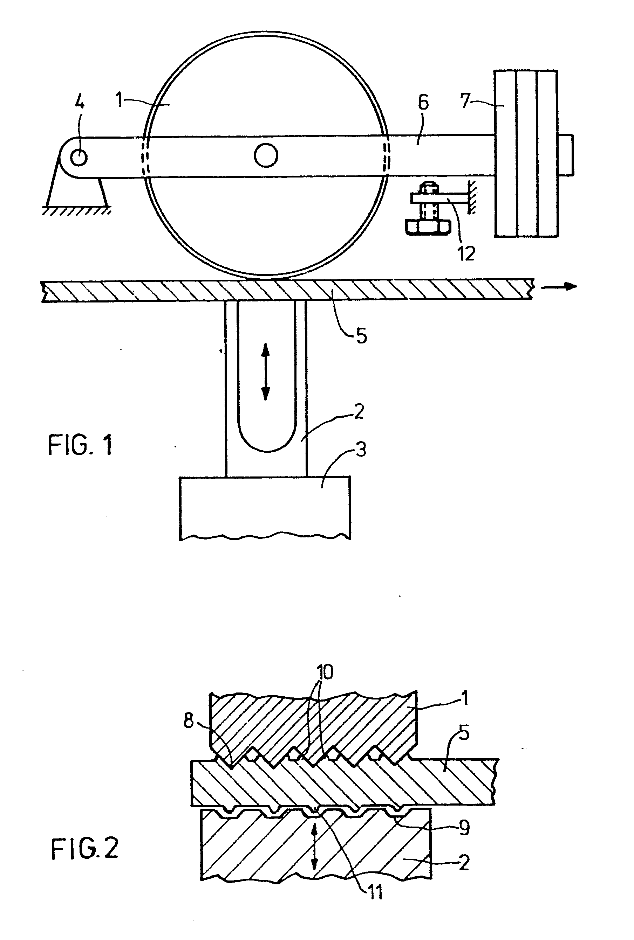

Die thermoplastische Materialbahn 5 wird mit ihren Rändern zur Verdickung und Aufrauhung ihrer Ränder durch beidseitig angeordnete Ultraschallvorrichtungen geführt. Fig. 1 zeigt eine schematische Darstellung eines Ausführungsbeispiels der Vorrichtung. Auf der Bahn 5 liegt ein rotierbares Werkzeug 1 auf, welches an einem Hebel 6 drehbar gelagert ist und wobei der Hebel an der einen Seite um eine Lagerstelle 4 schwenkbar angeordnet ist und auf der anderen Seite mit einem Druck senkrecht zur Bahn 5 belastet wird. Der Druck zur Anpressung des rotierbaren Werkzeuges 1 auf die Bahn wird in diesem Beispiel auf einfache Weise durch austauschbare und verschiebbare Gewichte 7 ausgeführt. Gleichermaßen könnte auch ein pneumatisch oder hydraulisch angetriebener Kolben, eine Feder oder dergleichen auf den Hebel den für die Verdickung gewünschten Druck ausüben. Ein einstellbares Endlager 12 begrenzt den Hebelweg nach unten, wenn sich keine Materialbahn durch die Vorrichtung bewegt.

Unter der Bahn 5 und mittig unter dem rotierbaren Werkzeug 1 ist die Sonotrode 2 mit Ultraschallkopf 3 angeordnet. Mit der Schwingungsenergie der Ultraschalleinrichtung 2, 3, die von der Unterseite gegen die Bahn 5 und gegen das von oben mit Verdickungsprofilen versehene unter Druck aufliegende rotierbare Werkzeug 1 schwingt, wird örtlich nur an den vorstehenden Aufwölbungen des rotierbaren Werkzeuges 1 konzentriert Wärme erzeugt, die die thermoplastische Bahn anschmilzt und bleibende dauerhafte Verformungen wie Verdickungen und Aufrauhungen erzeugt.

Das rotierbare Werkzeug 1 kann auch in bekannter Weise durch ein auf der Bahn laufendes Gummireibrad angetrieben werden, wenn dies erforderlich ist, um eine Relativbewegung der Bahn 5 gegen das Werkzeug 1 zu vermeiden.

Fig. 2 zeigt das Zusammenwirken des rotierbaren Werkzeuges 1 und der Sonotrode 2. In dieser beispielsweisen Darstellung ist das rotierbare Werkzeug 1 mit fünf umlaufenden spitzen Graten 8 und dazwischenliegenden Rillen versehen. Das rotierende Werkzeug 1 läuft mit Druck belastet auf der Bahnkante der Folienbahn 5, die ihrerseits auf einer örtlich feststehenden Sonotrode 2 aufliegt. Durch die von der Ultraschalleinrichtung 2, 3 erzeugten Schallschwingungen schmilzt das thermoplastische Material der Folienbahn 5 und fließt beidseitig der Grate 8 in die dazwischenliegenden Rillen und bildet hier Aufwölbungen 10, die sich in Laufrichtung der Bahn fortsetzen. Der Bahnrand hat pro Grat 8 je zwei Aufwölbungen mit einer dazwischenliegenden Rille. Nach Verlassen des Prägerades und der Sonotrode erstarren die Aufwölbungen und bilden sich auch nicht zurück.

Ist die Sonotrode 2 wie hier dargestellt mit Nuten 9 versehen, die unter den Graten 8 des rotierenden Werkzeuges 1 liegen, so bilden sich hier überraschenderweise auch auf der Unterseite der Bahn 5 unter jedem Grat 8 Aufwölbungen 11, die ebenso formstabil bleiben wie die Aufwölbungen 10 auf der Oberseite der Bahn 5. Dieses Ultraschallverfahren ist nicht auf diese Verdickungs- und Aufrauhmuster beschränkt. Die Wahl der Anzahl der Grate 8 und der Andruckkraft des rotierenden Werkzeuges 1 sowie das Variieren der Ultraschallfrequenzen zwischen 20 – 80 kHz und die Stärke der Ultraschallenergie lassen weitgehende Anpassungen der Randverdickungen an die gestellten Anforderungen zu.

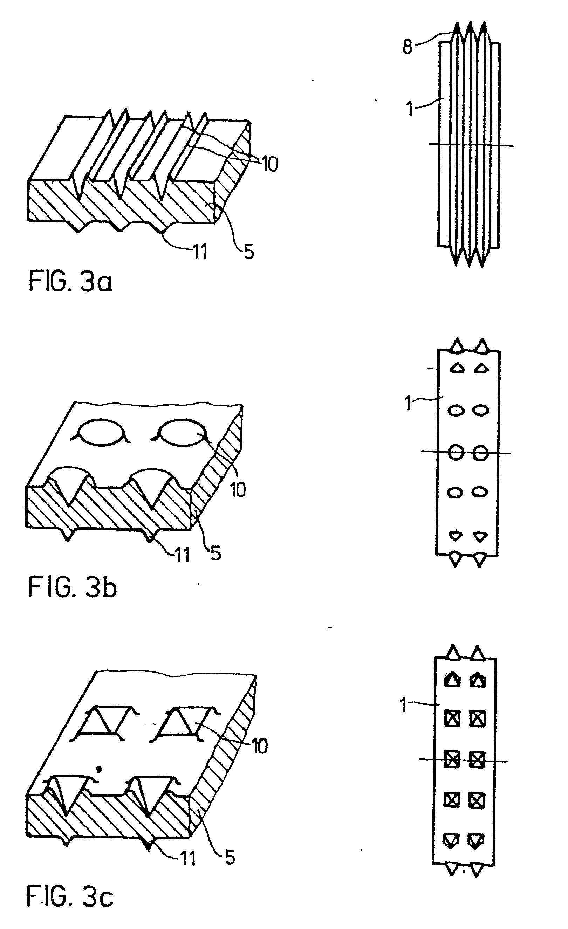

Weitere Beispiele für die Randverdickung zeigen die Fig. 3a bis 3c:

Fig. 3a zeigt in perspektivischer Darstellung ein Bahnrandstück mit durchgehenden in Bahnlaufrichtung verlaufenden Aufwölbungen 10 auf der Bahnoberseite und auf der Unterseite 11. Das Werkzeug hat hier drei umlaufende Grate 8 und erzeugt auf der Bahnoberseite sechs und auf der Unterseite drei Aufwölbungen 10, 11. Durch Abschleifen von Teilen der Grate 8 auf dem Werkzeug lassen sich auch alternierend auftretende Aufwölbungen 10, 11 herstellen.

Fig. 3b zeigt das Muster eines Werkzeuges, in welches kegelförmige Stifte eingesetzt wurden. Es entstehen so auf der Bahnoberfläche runde Kratzer 10 mit einem festen aufgewölbten Rand auf der Unterseite, bei ausgesparter Sonotrode 2, kegelige Erhebungen 11. Die Anzahl ist frei wählbar durch die Anzahl der in das Werkzeug eingesetzten Stifte und Stiftreihen.

Fig. 3c zeigt das durch Rechteckpyramiden auf dem Werkzeug 1 auf dem Bahnrand entstehende Verdickungen. Derartige Pyramiden lassen sich fertigungstechnisch leicht herstellen, indem ein Werkzeug 1 mit umlaufenden Graten so geschliffen wird, daß diese Pyramiden stehenbleiben.

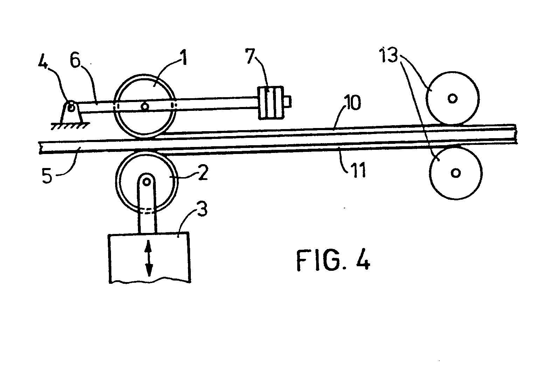

Fig. 4 zeigt eine weitere Ausführungsform der Erfindung. Statt der festen Sonotrode in Fig. 1 wird hier eine rotierende Sonotrode 2 mit Ultraschallkopf 3 eingesetzt. Diese Sonotrode 2 kann ebenso, wie die vorher beschriebene, an ihrer Oberfläche glatt oder mit Profilen versehen sein. Der Vorteil dieser Ausführungsform besteht in der Verhinderung von gleitender Reibung zwischen der thermoplastischen Materialbahn 5 und der Sonotrode 2, wodurch ein Abrieb von der Materialbahn und somit eine Staubbildung vermieden wird. Die durch das Ultraschallverfahren entstehenden starken Randverdickungen 10, 11 werden in einer nachgeschalteten Vorrichtung durch zwei Kalandrierwalzen 13 teilweise wieder zusammengedrückt und somit weiter verfestigt, so daß die verbleibenden Aufwölbungen dann erheblichen Wickeldruck aufnehmen können, ohne sich zurückzuformen.

Das erfindungsgemäße Verfahren und die Vorrichtung zeigen erhebliche Vorteile gegenüber allen bisher bekannten Verfahren und Vorrichtungen zur Randverdickung insofern, als keine zusätzliche Verformung der Bahnkante, die sogenannte Flügeligkeit, erzeugt wird. Für den Fachmann war es nicht vorauszusehen, daß mit der Anpassung von Ultraschall und Druck und durch entsprechende Ausbildung des rotierbaren Werkzeuges und der Sonotrode in einem Arbeitsgang eine gleichzeitige Randverdickung auf der Ober- und Unterseite der Bahnkante möglich sein würde.

Durch diese beidseitige Randüberhöhung wird ein Verrutschen oder Ausschießen der Bahn verhindert. Durch die zahlreichen Ausbildungsmöglichkeiten des rotierenden Werkzeuges an seinem Umfang und der Sonotrode lassen sich für jeden Anwendungszweck geeignete Muster der Verdickungen herstellen. Von besonderem Vorteil ist die Dauerhaftigkeit der erzeugten Aufwölbungen, die durch anschließendes Kalandrieren noch verbessert werden kann, so daß selbst höchste Wickeldrücke von den Verdickungen am Bahnrand aufgenommen werden können. Mit diesem Verfahren ist es möglich, auch oberflächenempfindliche Materialien, wie z. B. Bahnen mit photographischen Emulsionen, in großen Durchmessern aufzuwickeln und so rationell zu verarbeiten.

**Patentansprüche**

1. Verfahren zum kontinuierlichen Verdicken und Aufrauhen der Ränder einer Bahn (5) aus thermoplastischem Material, wobei die Bahn (5) mit ihren Rändern durch Stationen mit rotierbaren profilierten Werkzeugen (1) und gegenüber den Werkzeugen (1) angeordneten Sonotroden (2) von Ultraschallköpfen (3) geführt wird, dadurch gekennzeichnet, daß die thermoplastischen Verdickungen und Aufrauhungen (10, 11) mit Ultraschallschwingungsenergie und gleichzeitigem ständig wirkendem Anpreßdruck der rotierbaren Werkzeuge (1) gegen die Sonotroden (2) erzeugt werden.

2. Vorrichtungen zum kontinuierlichen Verdicken und Aufrauhen der Ränder einer Bahn (5) aus thermoplastischem Material, bestehend aus einem rotierbaren profilierten Werkzeug (1) und einer gegenüber dem Werkzeug angeordneten Sonotrode (2) eines Ultraschallkopfes (3), zwischen denen der Rand der Bahn hindurchführbar ist, dadurch gekennzeichnet, daß das Werkzeug (1) mit einer Andruckvorrichtung (4, 6, 7) versehen und so gelagert ist, daß die zwischen dem Werkzeug (1) und der Sonotrode (2) hindurchführbare Bahn (5) gegen die Sonotrode (2) ständig mit Druck anpreßbar ist.

3. Vorrichtung nach Anspruch 2, dadurch gekennzeichnet, daß zum Erreichen eines beidseitigen verzugsfreien Verdickens und Aufrauhens der Ränder einer Bahn (5) das rotierbare Werkzeug (1) in Laufrichtung der Bahn (5) auf dem Umfang mit vorstehenden Profilen (8) und die Sonotrode (2) mit jeweils den Profilen (8) mittig gegenüberliegenden Nuten (9) in Laufrichtung der Bahn (5) versehen ist.

4. Vorrichtung nach Anspruch 2 und 3, dadurch gekennzeichnet, daß das rotierbare Werkzeug. (1) vorzugsweise durch ein von der Bahn (5) mitgenommenes Reibrad angetrieben wird, so daß im Berührungspunkt zwischen Werkzeug (1) und Bahn (5) keine Relativgeschwindigkeit auftritt.

5. Vorrichtung nach Anspruch 2 bis 4, dadurch gekennzeichnet, daß in Bahnlaufrichtung nach der Station zum Verdicken und Aufrauhen der Ränder der Bahn (5) eine Kalandriervorrichtung (13) zur Verfestigung der Verdickungen angeordnet ist.

6. Vorrichtung nach Anspruch 2 bis 5, dadurch gekennzeichnet, daß statt der feststehenden Sonotrode (2, Fig. 1) eine rotierende Sonotrode (2, Fig. 4) angeordnet ist, die auf ihrem Umfang für eine einseitige Verdickung der Bahnränder glatt ist oder für eine beidseitige Verdickung der Bahnränder mit in Laufrichtung der Bahn verlaufenden Profilen (9) versehen ist.

7. Vorrichtung nach Anspruch 2 bis 6, dadurch gekennzeichnet, daß das Profil (8) auf dem Umfang des rotierbaren Werkzeuges (1) aus mindestens einem umlaufenden Grat (8) oder mindestens einer Reihe in Laufrichtung der Bahn (5) angeordneter Kegel- oder pyramidenförmiger Erhebungen besteht.

**Claims**

1. Process for continuously thickening and roughening the edges of a web (5) of thermoplastic material, wherein the edges of the web (5) are guided through units with rotatable profiled devices (1) and sonotrodes (2) of ultrasonic heads (3) arranged opposite the devices (1), characterised in that the thermoplastic thickened and roughened areas (10, 11) are produced by ultrasonic vibrational energy and simultaneous constantly exerted contact pressure of the rotatable devices (1) against the sonotrodes (2).

2. An apparatus for continuously thickening and roughening the edges of a web (5) of thermoplastic material, consisting of a rotatable profiled device (1) and a sonotrode (2) of an ultrasonic head (3) arranged opposite the device, between which the edge of the web can be guided, characterised in that the device (1) is provided with a pressure apparatus (4, 6, 7) and is positioned in such a way that the web (5) which is able to be guided between the device (1) and the sonotrode (2) is able to be continuously pressed against the sonotrode (2) by pressure.

3. An apparatus according to Claim 2, characterised in that in order to achieve non-distorted thickening and roughening of both sides of the edges of a web (5) the periphery of the rotatable device (1) is provided with projections (8) in the direction of travel of the web (5) and the sonotrode (2) is provided with grooves (9) which are in each case arranged centrally opposite the projections (8) in the direction of travel of the web (5).

4. An apparatus according to Claim 2 and 3, characterised in that the rotatable device (1) is preferably driven by a friction wheel entrained by the web (5), so that no relative movement occurs at the point of contact between the device (1) and the web (5).

5. An apparatus according to Claim 2 to 4, characterised in that following the unit for thickening and roughening the edges of the web (5) in the direction of travel of the web a calendering apparatus (13) is arranged for reinforcing the thickened areas.

6. An apparatus according to Claim 2 to 5, characterised in that instead of the stationary sonotrode (2, Fig. 1) a rotating sonotrode (2, Fig. 4) is used, the periphery of which is smooth for a one-sided thickening of the web edges or is provided with projections (9) running in the direction of travel of the web for thickening both sides of the web edges.

7. An apparatus according to Claim 2 to 6, characterised in that the profile (8) of the periphery of the rotating device (1) consists of at least one circulating ridge (8) or at least one row of conical or pyramid-shaped elevations arranged in the direction of flow of the web (5).

**Revendications**

1. Procédé mis en œuvre selon un mode continu en vue d'épaissir et de rendre rugueux les bords d'une bande (5) de matière thermoplastique, cette bande (5) défilant, avec ses bords, à travers des postes comportant des organes rotatifs profilés (1) en face desquels sont disposées des sonotrodes (2) de têtes à ultra-sons (3), caractérisé en ce que les épaississements et les rugosités thermoplastiques (10, 11) sont formés par une énergie oscillatoire d'ultra-sons et, en même temps, par la pression d'application des organes rotatifs (1) agissant continuellement contre les sonotrodes (2).

2. Dispositif mis en œuvre selon un mode continu en vue d'épaissir et de rendre rugueux les bords d'une bande (5) de matière thermoplastique, ce dispositif étant constitué d'un organe rotatif profilé (1) face auquel est disposée une sonotrode (2) d'une tête à ultra-sons (3), le bord de la bande pouvant défiler entre cet organe et cette sonotrode, caractérisé en ce que l'organe rotatif profilé (1) est équipé d'un dispositif presseur (4, 6, 7) et est monté de telle sorte que la bande (5) pouvant défiler entre cet organe (1) et la sonotrode (2) puisse être appliquée continuellement par pression contre cette sonotrode (2).

3. Dispositif suivant la revendication 2, caractérisé en ce que, en vue de former des épaississements et des rugosités sans déformations sur les deux faces des bords d'une bande (5), l'organe rotatif (1) comporte, sur sa périphérie et dans le sens de défilement de la bande (5), des profils en saillie (8), tandis que la sonotrode (2) comporte, également dans le sens de défilement de la bande (5), des rainures (9) situées chacune en face du centre des profils précités (8).

4. Dispositif suivant les revendications 2 et 3, caractérisé en ce que l'organe rotatif (1) est actionné, de préférence, par une roue de friction entraînée par la bande (5) de telle sorte qu'il n'y ait aucune vitesse relative au point de contact entre l'organe (1) et la bande (5).

5. Dispositif suivant les revendications 2 à 4, caractérisé en ce que, dans le sens de défilement de la bande, après le poste prévu pour former des épaississements et des rugosités sur les bords de cette bande (5), est installé un dispositif de calandrage (13) destiné à renforcer les épaississements.

6. Dispositif suivant les revendications 2 à 5, caractérisé en ce que, au lieu de la sonotrode fixe (2, figure 1), on installe une sonotrode rotative (2, figure 4) dont la périphérie est lisse en vue de former des épaississements sur une seule face des bords de la bande ou qui comporte des profils (9) s'étendant dans le sens de défilement de la bande en vue de former des épaississements sur les deux faces des bords de celle-ci.

7. Dispositif suivant les revendications 2 à 6, caractérisé en ce que le profil (8) formé sur la périphérie de l'organe rotatif (1) est constitué d'au moins une arête périphérique (8) ou d'au moins une rangée de saillies coniques ou pyramidales disposées dans le sens de défilement de la bande (5).

FIG. 1

FIG.2

FIG. 3a

FIG. 3b

FIG. 3c

FIG. 4